# EUROPÄISCHE PATENTANMELDUNG

(11) **EP 1 394 455 A1**
(43) Veröffentlichungstag der Anmeldung: **03.03.2004**
(21) Anmeldenummer: 03019130.8
(22) Anmeldetag: 23.08.2003
(51) Int. Cl.: F16K 5/16

(54) **Hahnkükenventil**

(30) Priorität: 24.08.2002 DE 10238901
(71) Anmelder: Zentes Unitex GmbH, 63456 Hanau (DE)
(72) Erfinder: Finkeldei, Ferdinand, 60388 Frankfurt/M. (DE)
(74) Vertreter: Wolf, Günter, Dipl.-Ing.

(57) **Zusammenfassung**

Die Erfindung betrifft Hahnkükenventile, insbesondere für die Durchleitung von Polymeren, bestehend aus einem Gehäuse (1) mit Produktanschlüssen (2) und einem Kegelsitz (3) für den mit einer Produktpassage (4) versehenen Hahnkegel (5), dessen mit einer Stopfbüchse (7) abgedichtete Stellwelle (6) aus dem Gehäuse (1) herausragt. Erfindungsgemäß ist die Stellwelle (6) mit von außerhalb des Gehäuses (1) verstellbaren Einrichtungen (8) zum geringfügigen Abheben des Hahnkegels (5) aus seinem Kegelsitz (3) im beheizbar ausgebildeten Gehäuse (1) versehen. Außerdem ist mindestens stellwellenseitig über dem Hahnkegel (5) im Gehäuse (1) ein mit Druck- und Spülanschlüssen (9) versehener und nach außen abgedichteter Freiraum (10) angeordnet.

## Beschreibung

Die Erfindung betrifft ein Hahnkükenventil, insbesondere für die Durchleitung von viskosen Polymeren, bestehend aus einem Gehäuse mit Produktanschlüssen und einem Kegelsitz für den mit einer Produktpassage versehenen Hahnkegel, dessen Stellwelle, mit einer Stopfbüchse abgedichtet, aus dem Gehäuse herausragt.

Derartige, so genannte Hahnkükenventile sind hinlänglich bekannt und in Benutzung, so daß es diesbezüglich an sich keines druckschriftlichen Nachweises bedarf. Verwiesen sei aber bspw. auf Lueger/Grundlagen des Maschinenbaus (1960), Bd.1, Seite 199, wo ein solches Ventil dargestellt und beschrieben ist.
Verstellbar sind, wenn überhaupt, die Ventilkegel derartiger Ventile nur insoweit, als die Ventilkegel mehr oder weniger fest in ihren Kegelsitz gezogen werden können.
Diese Ventile, die eine strömungsgünstige Passage von durchzuleitenden Medien mit geringem Druckverlust zulassen, leisten aufgrund eingeschliffener Kegelsitze und Hahnkegel in Schließstellung eine perfekte Abdichtung, sind aber aufgrund der eingeschliffenen Zuordnung des Hahnkegels zum Kegelsitz bei relativ kleinem Kegelwinkel ohne besondere Maßnahmen nicht ohne weiteres zu verstellen und unterliegen außserdem leicht der Gefahr des Festfressens. Aus diesem Grund werden solche Ventile, wenn dies das durchzuleitende Medium zuläßt, geschmiert oder sie sind am zu drehenden Ventilkegel mit zwei Ringdichtungen ausgestattet.
Soweit bekannt, sind solche Hahnkükenventile in Leitungs- bzw. Anlagensystemen für die Förderung von hochviskosen Polymerisaten (bspw. Polyester) trotz ihrer an sich idealen Abdichtfunktion bislang nicht in Betracht gezogen worden, und zwar offenbar deshalb nicht, weil es sich dabei um Produkte handelt, deren Fließförderung zum einen schon bei Temperaturen unter ca. 260 °C wegen Erstarrung nicht mehr möglich ist und die auch in bestimmten System- bzw. Anlagenbereichen sowohl unter Vakuum als auch unter hohem Druck in der Größenordnung von ca. 250 bar stehen. Außerdem verbietet sich bei derartigen Polymerisaten (bspw. Polyester zur Kunstfaserherstellung) die Verwendung von Ventilschmiermitteln, da diese zu die Weiterverarbeitung störenden Verunreinigungen führen würden. Die Anordnung von vorerwähnten Dichtungsringen am Ventil- bzw. Hahnkegelkegel verbietet sich ebenfalls, da dies mit einer gewissen Totraumbildung zwischen den Dichtungsringen verbunden wäre und letztlich einer idealen, d.h., spaltfreien Abdichtung entgegensteht. Toträume auch der kleinsten Art sind also bei derartigen Produkten auf jeden Fall zu vermeiden, da in diesen stehenbleibende Produktmasse durch die ständig anliegende Beheizung verkohlen und damit Ventilbewegungen blockieren kann.

Der Erfindung liegt die Aufgabe zugrunde, Hahnkükenventile der eingangs genanten Art auch für schwierige Produkte der insbesondere genannten Art zugänglich zu machen, d.h., ein solches Ventil soll dahingehend ausgebildet und verbessert werden, daß bei gewährleisteter Abdichtung in Schließstellung, günstiger Strömungsführung und totraumfreier Gestaltung in jeder Stellung eine Verstellblokade durch das Produkt vermieden ist.

Diese Aufgabe ist mit einem Hahnkükenventil der eingangs genannten Art nach der Erfindung dadurch gelöst, daß die Stellwelle mit von außerhalb des Gehäuses verstellbaren Einrichtungen zum geringfügigen Abheben des Hahnkegels aus seinem Kegelsitz im beheizbar ausgebildeten Gehäuse versehen und daß mindestens stellwellenseitig über dem Hahnkegel im Gehäuse ein mit Druck- und Spülanschlüssen versehener und nach außen abgedichteter Freiraum angeordnet ist.

Die Maßgabe, daß der nach außen abgedichte Freiraum "mindestens stellwellenseitig" angeordnet sein soll, nimmt Rücksicht darauf, daß damit zwei Arten von Kükenventilen angesprochen sind, und zwar bzgl. der Durchgangspassage zum Einen derart, daß sich diese quer zur Kükenachse erstreckt und zum Anderen derart, daß die Passage axial in das Küken einmündet und im wesentlichen radial aus diesem wieder herausführt.

Bezgl. des notwendigen Anhubes eines bspw. 15°- Hahnkegels, um diesen aus seinem Dichtsitz zu lösen und die Produktpassage anders einstellen oder das Ventil in Schließstellung bringen zu können, ist darauf hinzuweisen, daß dafür ein minimaler Anhub in der Größenordnung von 0,5 bis 1 mm genügt.

Mit der erfindungsgemäßen Ausbildung des Hahnkükenventils wird also durch den Anhub des Hahnkegels dessen Dichtung bis zu einem gewissen Grade gezielt aufgehoben, wobei aber austretendes Produkt gezielt in den mindestens einen nach außen abgedichteten Freiraum gelangt, der aber mindestens für die Verstellperiode mit Dampf durchspült wird, was mit einer Hydrolisierung des dort eingetretenen Polymerisates verbunden ist, das dadurch aus dem Freiraum abgeführt werden kann. Nach erfolgter Umstellung der Durchströmpassage auf einen anderen Anschluß am Ventilgehäuse wird dann der Hahnkegel wieder mit den Einrichtungen zum Anheben in seinen Dichtsitz zurückgegestellt bzw. zurückgedrückt.

Diese Einrichtungen zum geringfügigen Anheben und natürlich auch zum Zurückstellen des Hahnkegels in Dichtungsposition sind in bevorzugter Ausführungsform und erfindungsgemäß derart ausgebildet, daß diese aus mindestens einem Gewindegang an der Stellwelle und einem mit diesem im Eingriff stehenden Stellring gebildet sind, der drehbar über der Stopfbüchse in deren Halterung gelagert ist. Anheben und Verstellen des Hahnkegels sind also im Grunde zwei voneinander unabhängige Vorgänge, d.h., am Ventil, was noch näher erläutert wird, sind zwei Betätigungszugriffe vorhanden, nämlich einer der mit dem Stellring und einer der mit der Stellwelle des Hahnkegels in Verbindung steht.
Zu beachten ist bezgl. der Ventilverstellungen, daß dies bei den hier interessierenden Anlagen nur in relativ großen Zeitabständen zu erfolgen hat, wenn bspw. die einem kontinuierlich arbeitendem Polymeristaionsreaktor nachgeschalteten Filtergruppen einzeln abgeschaltet werden müssen, um bei Weiterbetrieb der einen Gruppe die Filter in der abgeschalteten anderen Gruppe auswechseln zu können, während es bei chargenweise betriebenen Polymerisationsreaktoren im wesentlichen darum geht, den Reaktorabflußanschluß zu öffnen und zu schließen.

Das erfindungsgemäße Hahnkükenventil wird nachfolgend anhand der zeichnerischen Darstellung von Ausführungsbeispielen näher erläutert.

### Es zeigt schematisch

- Fig.1: einen Längsschnitt durch ein Hahnkükenventil mit sich quer zu dessen Längsache erstreckender Durchströmpassage;
- Fig.2A-2C: Querschnitte durch das Ventil gemäß Fig.1 mit unterschiedlichen Stellungen des Hahnkükens;
- Fig.3: einen Längsschnitt durch eine andere Ausführungsform des Ventiles;
- Fig.4: im Schnitt eine bevorzugte Ausführungsform der Einrichtungen zum Anheben und Zurückstellen des Hahngeles;
- Fig.5: einen Längsschnitt entsprechend dem der Fig.3 mit weiteren vorteilhaften Einzelheiten,
- Fig.6: eine Ansicht des Ventiles gemäß Fig.5 von oben;
- Fig.7A,7B: Schnitte durch das Ventil gemäß Fig.5 und
- Fig.8,9: Schaltschemata von Polymerisationsanlagen mit den darin anzuordnenden Ventilen.

Das Hahnkükenventil, von dem hier ausgegangen ist, besteht nach wie vor aus einem Gehäuse 1 mit Produktanschlüssen 2 und einem Kegelsitz 3 für den mit einer Produktpassage 4 versehenen Hahnkegel 5, dessen mit einer Stopfbüchse 7 abgedichtete Stellwelle 6 aus dem Gehäuse 1 herausragt.

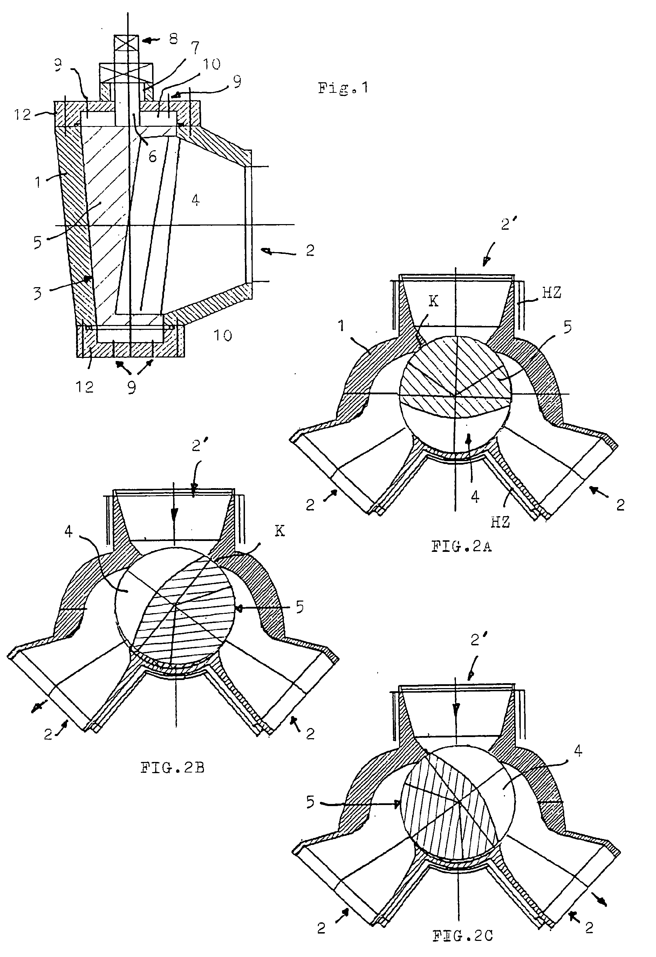

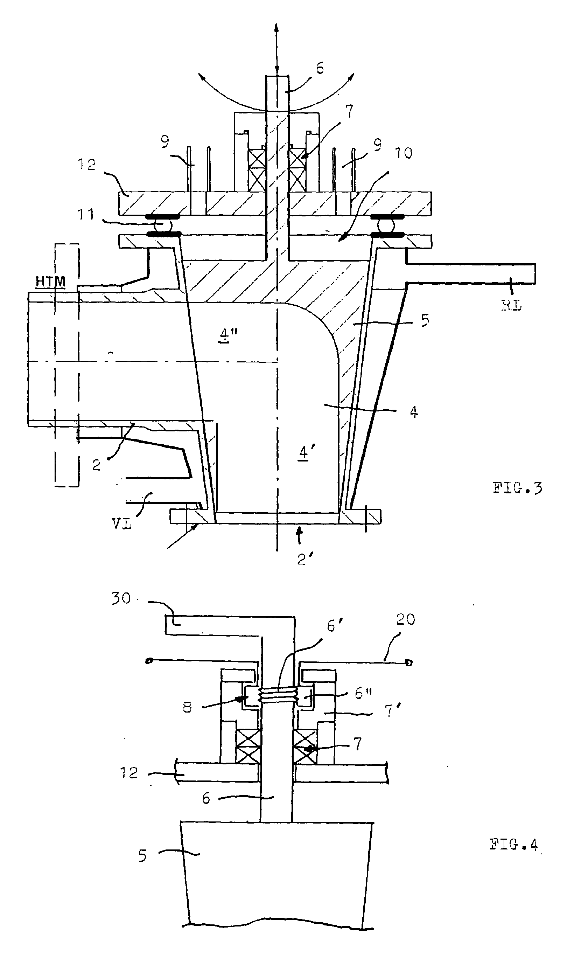

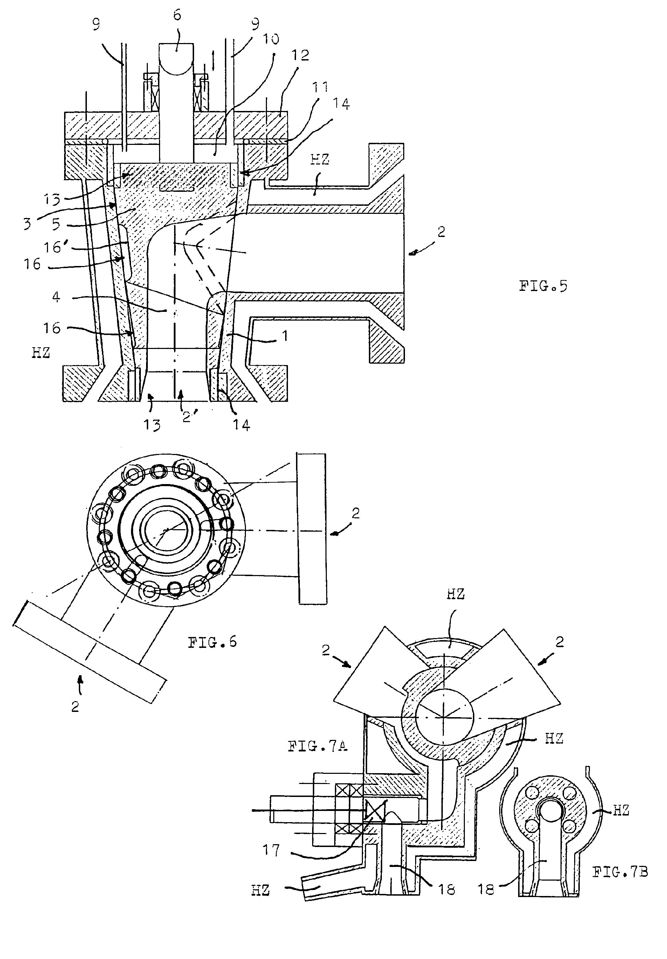

Für alle dargestellten Ausführungsbeispiele ist nunmehr wesentlich, daß die Stellwelle 6 mit den vorerwähnten, von außerhalb des Gehäuses 1 einstellbaren Einrichtungen 8 zum geringfügigen Abheben des Hahnkegels 5 aus seinem Kegelsitz 3 im beheizbar ausgebildeten Gehäuse 1 versehen und daß mindestens stellwellenseitig über dem Hahnkegel 5 im Gehäuse 1 ein mit Druck- und Spülanschlüssen 9 versehener und nach außen abgedichteter Freiraum 10 angeordnet ist. Verwiesen wird hierzu insbesondere auf die Fig.1 und Fig.3 und bezgl. der nur schematisch in Fig.1 angedeuteten Einrichtungen 8 auf Fig.4, wonach diese Einrichtungen 8 zum Anheben des Hahnkegels 5 aus mindestens einem Gewindegang 6' an der Stellwelle 6 und einem mit diesem im Eingriff stehenden Stellring 6" gebildet sind, der drehbar über der Stopfbüchse 7 in deren Halterung 7' gelagert ist. Der bspw. ringartig ausgebildete Stellgriff für den Stellring 6" ist in Fig.4 mit 20 bezeichnet und der für den Hahnkegel 5 mit 30.

Die in den Fig.2A-2C nur schematisch angedeute Heizung des Gehäuses 1 ist mit HZ bezeichnet, die gemäß Fig.3 Vor- und Rücklaufanschlüsse VL und RL aufweist.

Die Produktzufuhr erfolgt beim in den Fig.1 und 2 dargestellten Ventil durch den Anschluß 2', wobei in Fig.2A die Produktzufuhr gesperrt ist, in Fig.2B die Produktweiterleitung nach links und in Fig.2C nach rechts erfolgt, jenachdem welcher Strömungsweg innerhalb einer Polimeristionsanlage einzustellen ist. Solche Umschaltungen sind bspw. erforderlich, um einem kontinuierlich arbeitenden Polymeristaionsreaktor nachgeschaltete Filtergruppen zwecks Filterwechsel, wie vorerwähnt, abschalten bzw. wieder zuschalten zu können.

Das Gehäuse 1 und der Freiraum 10 sind unter Zwischenschaltung einer temperaturbeständigen Flachringdichtung 11 (siehe Fig.3) mit einem die Stopfbüchse 7 tragenden und die Druck- und Spülmittelanschlüsse 9 aufweisenden Flanschdeckel 12 verschlossen, was in Fig. stark vereinfacht dargestellt ist, wobei bei dieser Ausführungsform am stellenwellenfreien Ende des Hahnkekels 5 ebenfalls ein abgedichteter und abgedeckelter Freiraum 10' vorhanden ist, der mit seinen Anschlüssen 9 die einleitend erläuterte Funktion zu übernehmen hat.

Aus den Fig.1 und 2A - 2c ist ferner ersichtlich, daß das Gehäuse 1 mit drei im Wesentlichen radial von diesem abgehenden Produktanschlüssen 2 und der Hahnkegel 5 mit der sich zwischen Endbegrenzungen 12 erstreckenden Produktpassage 4 versehen ist, die im Querschnitt senkrecht zur Hahnkegelachse drittel- oder angenähert drittelmondförmig in Anpassung an die inneren Öffnungskanten K der Produktanschlüsse 2 ausgebildet ist. Diese Fig.2B und 2C lassen erkennen, daß bei den Durchströmstellungen des Hahnkegels keine Toträume im jeweiligen Strömungsweg vorhanden sind.

Das Ventil gemäß Fig.3 unterscheidet sich vom vorbeschriebenen dadurch, daß die Produktpassage 4 aus einem ersten, sich axial im Hahnkegel 5 erstreckenden Abschnitt 4' und aus einem zweiten sich im Wesentlichen radial erstreckenden, auf die Mündungen der Produktanschlüsse 2 einstellbaren Abschnitt 4" gebildet ist. Dargestellt ist in Fig.3 nur einer dieser Anschlüsse 2, die unter Vorgriff auf Fig.5, wie dort dargestellt, am Gehäuse 1 angesetzt sind. Die Produktzufuhr erfolgt bei dieser Ausführungsform axial direkt von unten in den Hahnkegel 5, wobei in diesem Falle das Gehäuse 1 und der hier nur stellwellenseitig angeordnete Freiraum 10 unter Zwischenschaltung einer temperaturbeständigen Flachringdichtung 11 mit einem die Stopfbüchse 7 tragenden und die Druck- und Spülmittelanschlüsse 9 aufweisenden Flanschdeckel 12 verschlossen sind.

Beim Ausführungsbeispiel gemäß Fig.5, das im Prinzip dem gemäß Fig.3 entspricht, sind die beiden Endbereiche 13 des Hahnkegels 5 in Anpassung an zylindrische Endbereiche 14 des Kegelsitzes 3 entsprechend zylindrisch ausgbildet. Da, wie vorerwähnt, für den Anhub des Hankegels 5 nur etwa 0,5 bis 1 mm erforderlich sind, bleiben diese zylindrischen Bereiche auch bei der Hubverstellung vorteilhaft im Schiebesitzeingriff, was bedeutet, daß dadurch der Austritt eines unter Druck stehenden Produktes in den Freiraum 10 nicht unwesentlich reduziert ist.

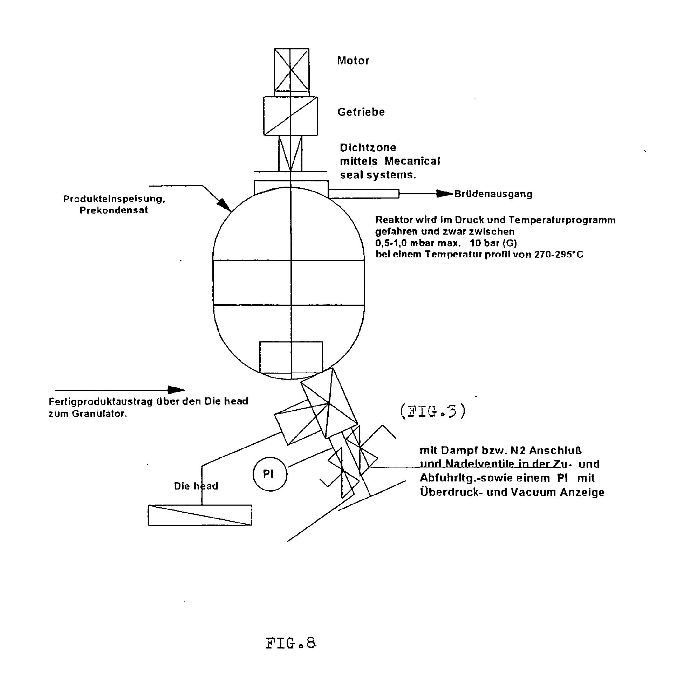

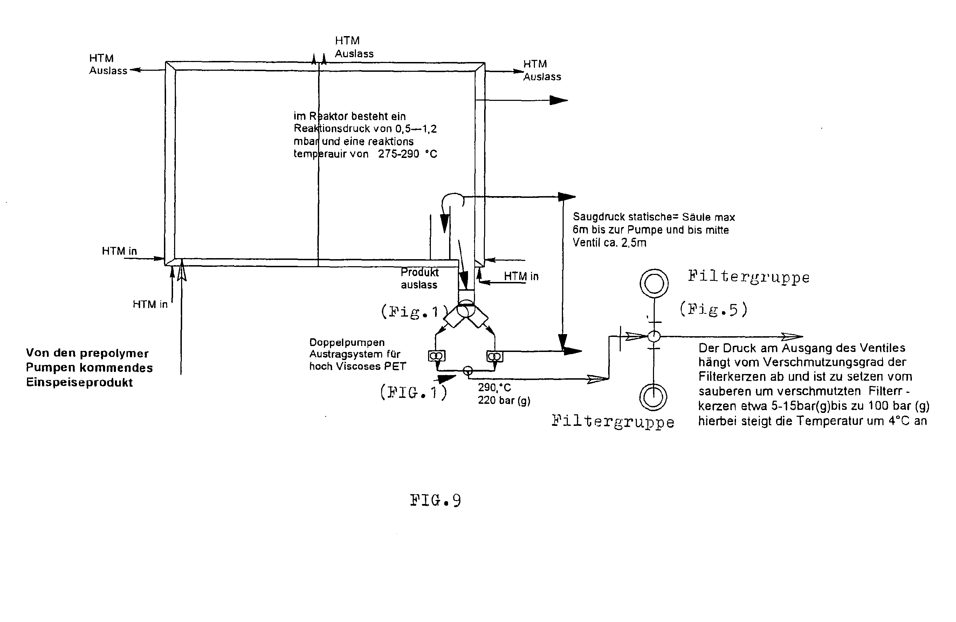

Mit Rücksicht darauf, daß bei Einbau solcher Ventile in einer Polymerisationsanlage diese Ventile auch unter hohem Druck stehen können, der natürlich auch bei Ventilumschaltung bspw. von einer Filtergruppe her ansteht, muß für eine Druckentlastung gesorgt worden, wofür in der Außenumfangsfläche des Hahnkegels 5 Druckentlastungseintiefungen 16 angeordnet sind, die aus einem geringfügig vom Kegelwinkel abweichenden Schräganschliff bestehen können und/oder einer aus Fig.7a ersichtlichen Flachnut 16', die bei entsprechender Hahnkegelstellung vom linken Anschluß 2 bspw. einer Filtergruppe den Weg zu einem mit Ventil 17 bestückten Entleerungskanal 18 freistellt. Dieser im Schnitt auch in Fig.7B dargestellte Bereich ist in den Fig.5,6 der Übersichtlichkeit wegen nicht berücksichtigt.
Um der Vollständigkeit halber zu verdeutlichen, an welchen Stellen die beschriebenen Ventile in Polymerisationsanlagen zum Einbau kommen, wird auf die Legenden, insbesondere Druck- und Temperaturangaben enthaltenden Fig.8,9 verwiesen, in denen statt Bezugszeichen auf die jeweiligen, die betreffenden Ventile darstellenden Figuren Bezug genommen ist. Bei Fig.8 handelt es sich um einen Chargenreaktor und bei Fig.9 um einen kontinuierlich zu betreibenden Polymerisationsreaktor.
In Chargenreaktoren hergestelltes Produkt wird dabei nach Abzug aus dem Reaktor und Strangbildung granuliert und Extrudern zur Weiterverarbeitung zugeführt, während das einem Polymerisationsreaktor kontinuierlich abgepumpte Produkt nach Passage der vorerwähnten Filtergruppen und von Wärmetauschern bspw. direkt zu Kunststofffäden weiterverarbeitet wird.

## Patentansprüche

1. Hahnkükenventil, insbesondere für die Durchleitung von Polymeren, bestehend aus einem Gehäuse (1) mit Produktanschlüssen (2) und einem Kegelsitz (3) für den mit einer Produktpassage (4) versehenen Hahnkegel (5), dessen mit einer Stopfbüchse (7) abgedichtete Stellwelle (6) aus dem Gehäuse (1) herausragt,
**dadurch gekennzeichnet,**
**daß** die Stellwelle (6) mit von außerhalb des Gehäuses (1) verstellbaren Einrichtungen (8) zum geringfügigen Abheben des Hahnkegels (5) aus seinem Kegelsitz (3) im beheizbar ausgebildeten Gehäuse (1) versehen und daß mindestens stellwellenseitig über dem Hahnkegel (5) im Gehäuse (1) ein mit Druck- und Spülanschlüssen (9) versehener und nach außen abgedichteter Freiraum (10) angeordnet ist.

2. Hahnkükenventil nach Anspruch 1,
**dadurch gekennzeichnet,**
**daß** die Einrichtungen (8) zum Anheben des Hahnkegels (5) aus mindestens einem Gewindegang (6') an der Stellwelle (6) und einem mit diesem im Eingriff stehenden Stellring () gebildet ist, der drehbar über der Stopfbüchse (7) in deren Halterung(7') gelagert ist.

3. Hahnkükenventil nach Anspruch 1 oder 2,
**dadurch gekennzeichnet,**
**daß** das Gehäuse (1) und der Freiraum (10) unter Zwischenschaltung einer temperaturbeständigen Flachringdichtung (11) mit einem die Stopfbüchse (7) tragenden und die Druck- und Spülmittelanschlüsse (9) aufweisenden Flanschdeckel (12) verschlossen sind.

4. Hahnkükenventil nach einem der Ansprüche 1 bis 3,
**dadurch gekennzeichnet,**
**daß** am stellenwellenfreien Ende des Hahnkekels (5) ebenfalls ein abgedichteter und abgedeckelter Freiraum (10') angeordnet ist.

5. Hahnkükenventil nach einem der Ansprüche 1 bis 4,
**dadurch gekennzeichnet,**
**daß** das Gehäuse (1) mit drei im Wesentlichen radial von diesem abgehenden Produktanschlüssen (2) und der Hahnkegel (5) mit der sich zwischen Endbegrenzungen (12) erstreckenden Produktpassage (4) versehen ist, die im Querschnitt senkrecht zur Hahnkegelachse drittel- oder angenähert drittelmondförmig in Anpassung an die inneren Öffnungskanten (K) der Produktanschlüsse (2) ausgebildet ist.

6. Hahnkükenventil nach einem der Ansprüche 1 bis 3,
**dadurch gekennzeichnet,**
**daß** die Produktpassage (4) aus einem ersten, sich axial im Hahn kegel (5) erstreckenden Abschnitt (4') und aus einem zweiten sich im Wesentlichen radial erstreckenden, auf die Mündungen der Produktanschlüsse (2) einstellbaren Abschnitt (4") gebildet ist.

7. Hahnkükenventil nach einem der Ansprüche 1 bis 6,
**dadurch gekennzeichnet,**
**daß** die beiden Endbereiche (13) des Hahnkegels (5) in Anpassung an zylindrische Endbereiche (14) des Kegelsitzes (3) entsprechend zylindrisch ausgbildet sind.

8. Hahnkükenventil nach Anspruch 6 oder 7,
**dadurch gekennzeichnet,**
**daß** in der Außenumfangsfläche des Hahnkegels (5) Druckentlastungseintiefungen (16) angeordnet sind.

9. Hahnkükenventil nach Anspruch 8,
**dadurch gekennzeichnet,**
**daß** ein Teil der Druckentlastungseintiefungen (16) als zu einem Entleerungskanal (18) führende Flachnut (16') am Hahnkegel (5) ausgebildet ist.
